# EUROPÄISCHE PATENTANMELDUNG

(11) **EP 2 452 843 A1**
(43) Veröffentlichungstag der Anmeldung: **16.05.2012**
(21) Anmeldenummer: 10290604.7
(22) Anmeldetag: 11.11.2010
(51) Int. Cl.: B60H 1/00

(54) **Klimaanlage für ein Kraftfahrzeug**

(71) Anmelder: Behr France Rouffach SAS, 68250 Rouffach (FR)
(72) Erfinder: Schlachter, Claude, 68480 Wolschwiller (FR)
(74) Vertreter: Grauel, Andreas

(57) **Zusammenfassung**

Die Erfindung betrifft eine Klimaanlage für ein Kraftfahrzeug, umfassend einen Verdampfer (2) und einen Heizer (3), deren Luftströme über eine Mischklappe (5) entweder getrennt oder gemeinsam in einen Mischraum (6) leitbar sind, von welchen ein Belüftungskanal (8), ein Entfrosterkanal (7) und ein Fußraumkanal (9) abzweigen. Um bei begrenztem Bauraum ein größeres Gebläse in die Klimaanlage einbauen zu können, ist mindestens ein Teil des Gebläses (12) in den Entfrosterkanal (7) oder den Belüftungskanal (8) integriert.

## Beschreibung

Die Erfindung betrifft eine Klimaanlage für ein Kraftfahrzeug, umfassend einen Verdampfer und einen Heizer, deren Luftströme über eine Mischklappe entweder getrennt oder gemeinsam in einen Mischraum leitbar sind, von welchem ein Belüftungskanal, ein Entfrosterkanal und ein Fußraumkanal abzweigen.

Klimaanlagen, wie sie in Fahrzeugen verwendet werden, sind sehr kompakt gebaut. Das heißt, dass Wärmetauscher, wie Verdampfer oder Heizer, sehr klein gehalten sind, wodurch ein hoher Druckabfall in der Klimaanlage verhindert wird. Auch der Bauraum für ein Gebläse, welches nahe einem Entfrosterkanal angeordnet sein kann, ist in diesen Fällen nur sehr begrenzt, was zur Folge hat, dass das Gebläse nur entsprechend klein dimensioniert werden kann, was häufig zu einer Überlastung des Gebläses führt. Weiterhin verschlechtern sich durch den Gebrauch eines kleinen Gebläses nicht nur dessen Wirkungsgrad sondern auch dessen Akustik.

In symmetrischen Klimaanlagen sind ein Verdampfer und ein Heizer angeordnet, wobei die durch den Verdampfer und/oder durch den Heizer geleiteten Luftströme von einer Mischklappe geregelt werden. Diese Mischklappe ermöglicht den Zugang der durch den Verdampfer und/oder durch den Heizer geleiteten Luftströme in einen Mischraum, welcher die Luftströme weiter zu einem Entfrosterkanal, einem Belüftungskanal und einen Fußraumkanal leitet. Das Gebläse liegt dabei vorzugsweise neben dem Entfroster- und dem Belüftungskanal. Da die maximale Distanz in dem Bereich von Entfroster-und Belüftungskanal vorgegeben ist, bestehen keine Möglichkeiten, ein größeres Gebläse einzubauen.

Der Erfindung liegt somit die Aufgabe zu Grunde, eine Klimaanlage anzugeben, bei welcher ein konstruktiv größeres, einen besseren Wirkungsgrad aufweisendes Gebläse in den begrenzten Bauraum einer Klimaanlage einsetzbar ist.

Erfindungsgemäß wird die Aufgabe dadurch gelöst, dass mindestens ein Teil des Gebläses in den Entfrosterkanal oder den Belüftungskanal integriert ist. Dies hat den Vorteil, dass das Gebläse mit dem Entfrosterkanal bzw. dem Belüftungskanal eine Baueinheit bildet. Das Gebläse und die Wandung des Entfrosterkanals oder die Wandung des Belüftungskanals sind dabei ineinander integriert. Durch diese Vorrichtung wird der vorhandene Bauraum in einer Klimaanlage optimal genutzt, so dass das Gebläse konstruktiv größer ausgebildet sein kann, wobei vormals in der Klimaanlage vorhandene Freiräume zur Vergrößerung des Gebläses genutzt werden. Durch den Einsatz eines größeren Gebläses erhöht sich der Wirkungsgrad der Klimaanlage.

Vorteilhafterweise bildet ein Abschnitt des Gebläses eine gemeinsame Wandung mit dem Entfroster- oder Belüftungskanal. Dabei bildet nur der Teil des Gebläses mit dem Entfroster- bzw. Belüftungskanals eine gemeinsame Wandung, der zur Vergrößerung des Gebläses unbedingt notwendig ist. Druckabfälle in dem Entfrosterkanal bzw. dem Belüftungskanal werden auf ein Minimum reduziert, da die Querschnitte des Entfrosterkanals bzw. des Belüftungskanals nur geringfügig eingeschränkt werden.

In einer Ausgestaltung verläuft das Gebläse entlang der Längserstreckung des Entfroster- oder Belüftungskanals und ragt vorzugsweise in diesen hinein. Dabei wird ein Teil des Gebläses in den Entfroster- oder Belüftungskanals hinein gebaut. Dadurch wird erreicht, dass der Querschnitt konstant auf der gesamten Breite des Austritts des Entfroster- bzw. Belüftungskanals verkleinert wird, wodurch eine konstante Strömung realisiert wird.

In einer Weiterbildung ragt das Gebläse in einen begrenzten Ausschnitt des Entfroster- oder Belüftungskanals hinein. Durch diese Gestaltuntg der Klimaanlage wird der Querschnitt des Entfroster- oder Belüftungskanals nur an einem kleinen Bereich reduziert, wodurch die Strömungsverhältnisse, wie sie normalerweise in diesen Kanälen realisiert werden, weitgehend aufrechterhalten werden können.

In einer Variante ragt das Gebläse quer zur Längserstreckung des Entfroster- oder Belüftungskanals in diesen hinein. Die Verringerung des Querschnitts wird durch diese Ausgestaltung nur auf einen begrenzten Bereich reduziert, wobei sich der Querschnitt des Entfroster- oder Belüftungskanals anschließend wieder aufweitet.

Vorzugsweise ist der begrenzte Abschnitt von Entfroster- oder Belüftungskanal auf die Breite des Gebläses beschränkt. Diese minimale Veränderung innerhalb des Entfroster- oder Belüftungskanals bewirkt, dass die Strömungsverhältnisse in dem Entfroster- oder Belüftungskanal trotz Vergrößerung des Gebläses weitgehend aufrecht erhalten werden, da die Verringerung des Querschnittes nur auf die Minimalbreite des Gehäuses zurück zu führen ist.

Die Erfindung lässt zahlreiche Ausführungsformen zu. Eine davon soll anhand der in der Zeichnung dargestellten Figuren näher erläutert werden.

Es zeigt:
- Fig. 1:: Prinzipdarstellung einer Klimaanlage gemäß dem Stand der Technik,
- Fig. 2:: Darstellung der Klimaanlage in einer ersten Ausführungsform mit einer gemeinsamen Wandung des Gebläses mit dem Entfrosterkanal,
- Fig. 3:: Prinzipdarstellung der Klimaanlage in einer zweiten Ausführungsform mit einer gemeinsamen Wandung des Entfrosterkanals mit dem Gebläse.

Gleiche Merkmale sind mit gleichen Bezugszeichen gekennzeichnet.

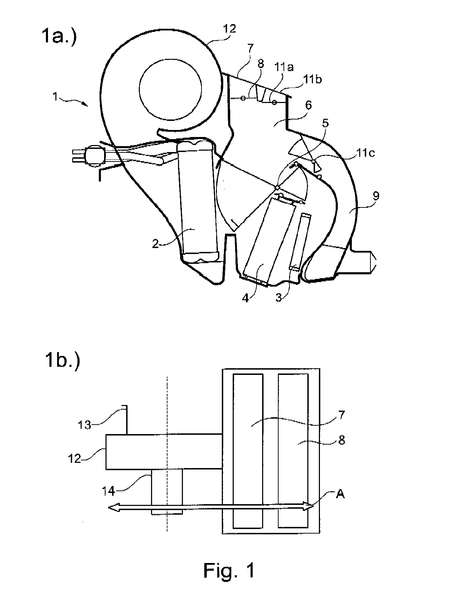

In Figur 1 ist in der Figur 1a ein Querschnitt durch eine Klimaanlage 1 dargestellt, wie sie in Kraftfahrzeugen verwendet wird. Figur 1b zeigt eine Draufsicht auf die in Figur 1a dargestellte Klimaanlage 1. Die Klimaanlage 1 umfasst dabei einen Verdampfer 2, in welchem die zugeführte Luft abgekühlt wird und einen Heizer 3, welchem ein elektrischer Zuheizer 4 nachgeordnet ist. Je nach Position einer Mischklappe 5, die vorteilhafterweise als Schmetterlingsklappe ausgebildet ist, wird nach Wunsch des Nutzers des Kraftfahrzeuges entweder die durch den Verdampfer 2 abgekühlte Luftströmung oder die durch den Heizer 3 aufgeheizte Luftströmung einem Mischraum 6 zugeführt. Bei der in der Figur 1 dargestellten Position der Mischklappe 5 wird die Luft vom Verdampfer 2 direkt in den Mischraum 6 geführt. Die Mischklappe 5 kann dabei auch solche Stellungen einnehmen, bei welchen die Luftströmung sowohl vom Verdampfer 2 als auch über den Heizer 3 und den elektrischen Zuheizer 4 in den Mischraum 6 geführt werden kann. Von dem Mischraum 6 aus erstrecken sich drei Kanäle, der Entfrosterkanal 7, der Belüftungskanal 8 sowie der Fußraumkanal 9. Alle Kanäle 7, 8, 9 sind mittels einem Luftaustritt vorgelagerten Klappen 11a, 11 b, 11 c in Abhängigkeit des Fahrerwunsches einstellbar, so dass aus dem Entfrosterkanal 7 und dem Belüftungskanal 8 sowie dem Fußraum 9 bedarfsweise Luft austreten kann.

In Figur 1a ist ein Gebläse 12 dargestellt, welches als Gebläseschnecke ausgebildet ist. Das Gebläse 12 ist dabei nahe dem Entfrosterkanal 7 angeordnet. Wie aus der Figur 1b in der Draufsicht ersichtlich, endet das Gebläse12 am Rand des von dem Entfrosterkanal 7 bzw. dem Belüftungskanal 8 gebildeten Einheit. Dem Gebläse wird dabei über einen Lufteintritt 13 Luft zugeführt, wobei das Gebläse 12 durch einen Motor 14 in Bewegung versetzt wird. Die Klimaanlage 1, wie sie im Zusammenhang mit der Figur 1 erläutert wurde, weist dabei eine begrenzte räumliche Distanz A auf, die in Figur 1 b dargestellt ist, und welche durch den vorhandenen Bauraum innerhalb des Kraftfahrzeuges vorgegeben ist.

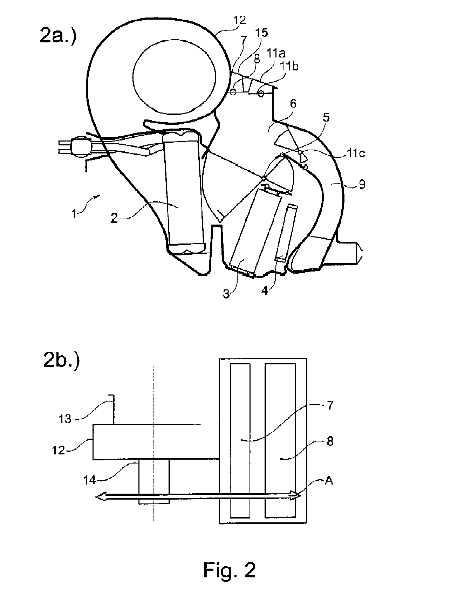

Figur 2 zeigt eine erste Ausführungsform der Erfindung, bei welcher das Gebläse12 in Richtung des Entfrosterkanals 7 ausgedehnt ist. Dadurch wird der Entfrosterkanal 7 von der, dem Entfrosterkanal 7 vorgelagerten Klappe 11 a bis zum Luftaustritt 15 in seiner gesamten Breite schmaler gestaltet. Wie in Figur 2b ersichtlich, wird der Querschnitt des Entfrosterkanals 7 auf der gesamten Längserstreckung des Entfrosterkanals 7 verkleinert. Das verwendete Gebläse 12 übersteigt dabei die Größenordnung der gemäß dem Stand der Technik verwendeten Gebläse und kann somit Luft mit einem verbesserten Wirkungsgrad in der Klimaanlage 1 transportieren. Mittels dieser Ausführungsform wird durch Ausnutzung der vorhandenen Distanz A, welche den Bauraum innerhalb des Kraftfahrzeuges kennzeichnet, der Einsatz eines größeren Gebläses 12 ermöglicht.

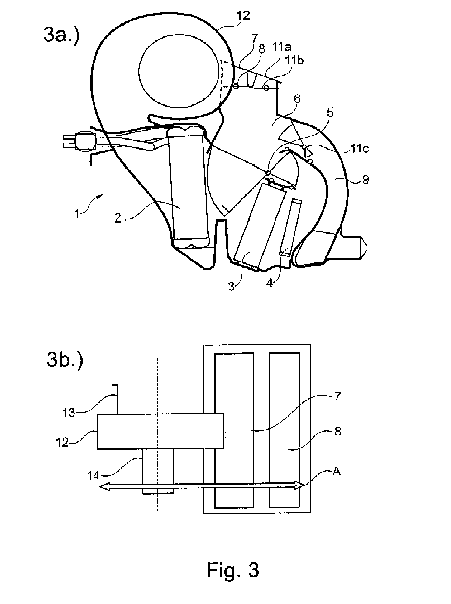

In Figur 3a ist eine zweite Variante der Integration von Entfrosterkanal 7 und Gebläse 12 dargestellt. Zur Vergrößerung des Gebläses 12 wird dabei die Wandung des Entfrosterkanals 7 lediglich nur in dem Bereich verändert, wie die Breite des Gebläses 12 es notwendig macht. Wie aus der Figur 3b ersichtlich, ragt dabei das Gebläse12 lediglich in einem Abschnitt in den Entfrosterkanal 7 hinein, welcher der Breite des Gebläses 12 entspricht. Im Gegensatz zu Figur 2, wo die gemeinsame Wandung zwischen Gebläse 9 und Entfrosterkanal 7 in der Längserstreckung des Defrosterkanals 7 verengt ist, ist hier die gemeinsame Wandung lediglich auf den Bereich der Breite des Gebläses 12 beschränkt. Somit ist ein größeres Gebläse einsetzbar, bei welchem zwar der Querschnitt des Entfrosterkanals 7 leicht verändert wurde, der Querschnittverlust wird dabei aber sehr gering gehalten.

Der Einsatz eines größeren Gebläses 12 sieht nicht nur einen besseren Wirkungsgrad, sondern auch eine bessere Akustik im Kraftfahrzeug nach sich.

Auf Grund der erfindungsgemäßen Lösung kann der vorhandene Bauraum der Klimaanlage 1 ohne Vergrößerung der Abmessungen der Klimaanlage 1 selbst im Kraftfahrzeug optimal genutzt werden und trotzdem eine verbesserte Leistung des Gebläses 12 der Klimaanlage 1 angeboten werden.

## Patentansprüche

1. Klimaanlage für ein Kraftfahrzeug, umfassend einen Verdampfer (2) und einen Heizer (3), deren Luftströme über eine Mischklappe (5) entweder getrennt oder gemeinsam in einen Mischraum (6) leitbar sind, von welchem ein Belüftungskanal (7), ein Entfrosterkanal (8) und ein Fußraumkanal (9) abzweigen, **dadurch gekennzeichnet, dass** wenigstens ein Teil eines Gebläse (12) in den Entfrosterkanal (7) oder den Belüftungskanal (8) integriert ist.

2. Klimaanlage nach Anspruch 1 **dadurch gekennzeichnet, dass** ein Abschnitt des Gebläses (12) eine gemeinsame Wandung mit dem Entfroster- (7) oder Belüftungskanal (8) bildet.

3. Klimaanlage nach Anspruch 1 oder 2, **dadurch gekennzeichnet, dass** das Gebläse (12) entlang der Längserstreckung des Entfroster- (7) oder Belüftungskanals (8) verläuft und vorzugsweise in diesen hinein ragt.

4. Klimaanlage nach Anspruch 1, 2 oder 3, **dadurch gekennzeichnet, dass** das Gebläse (12) in einen begrenzten Ausschnitt des Entfroster-(7) oder Belüftungskanals (8) hinein ragt.

5. Klimaanlage nach Anspruch 4, **dadurch gekennzeichnet, dass** das Gebläse (12) quer zur Längserstreckung des Entfroster- (7) oder Belüftungskanals (8) in diesen hinein ragt.

6. Klimaanlage nach Anspruch 4, **dadurch gekennzeichnet, dass** der begrenzte Abschnitt des Entfroster- (7) oder Belüftungskanals (8) auf die Breite des Gebläses (12) beschränkt ist.
